Europäisches Patentamt

European Patent Office

Office européen des brevets

(11) Publication number: **0 687 925 A2**

# EUROPEAN PATENT APPLICATION

(21) Application number: **95108052.2**

(22) Date of filing: **26.05.95**

(51) Int. Cl.⁶: **G02B 6/12**, G02B 6/13, G02B 6/30

(30) Priority: **08.06.94 JP 126529/94**

(43) Date of publication of application:
**20.12.95 Bulletin 95/51**

(84) Designated Contracting States:
**DE FR GB IT NL**

(71) Applicant: **HOECHST AKTIENGESELLSCHAFT**
**Brüningstrasse 50**
**D-65929 Frankfurt am Main (DE)**

(72) Inventor: **Okaniwa, Kaoru, Dr.**
**1-5-D-404 Nakanarusawa-cho**
**Hitachi-shi**
**Ibaraki (JP)**

(54) **Method of forming an optical coupling waveguide and a lightguide device having the optical coupling waveguide**

(57) A method of forming a polymeric optical coupling waveguide (1) on a principal lightguide (6) including a lightguiding layer (2), which comprises the steps of applying a photopolymerizable monomer or a photocrosslinkable or photopolymerizable polymer or a mixture thereof onto the principal lightguide (6), curing the polymeric optical coupling waveguide (1) by exposure through a mask, and removing the unreacted area of the applied coat with a suitable solvent.

Other methods are exposure and solubilizing of a photosolubilizable polymer or photolithographic patterning of the cured polymer.

The coupling waveguide may be tapered, with the bigger cross section towards the end face.

Fig. 1

EP 0 687 925 A2

Technical Field

This invention relates to an improvement in the efficiency of optical coupling between optical integrated devices. More particularly, the invention relates to a method of forming a polymeric optical coupling waveguide on lightguiding devices on optically integrated circuits. The invention also relates to a lightguide device provided with such polymeric optical coupling waveguide.

Background Art

Optical devices such as laser diodes (hereunder referred to as "LDs"), optical modulators and photodiodes (hereunder referred to as "PDs") may be integrated on a single substrate and interconnected with lightguides. Such as "optically integrated circuits" are the subject of active studies on a next-generation technology of optics with a view to reducing their size and weight while increasing their stability and performance. One of the technologies on optical integrated circuits that had been studied intensively is a monolithic integration of LDs and PDs on a GaAs substrate. However, the limited area of the GaAs substrate, as well as the great optical loss it causes and the high cost of GaAs have gradually discouraged researchers from continuing their efforts toward better GaAs substrates. The more versatile the functions that are to be exhibited by a single optical integrated circuit, the larger the area that is needed by the substrate. One reason for this is that the optical loss of a lightguide will increase at sharp bends.

On the other hand, the integration may advantageously lead to multifunctionality in a substrate. This is because the greatest loss to an optical integrated circuit occurs in the optical coupling between individual optical devices. Besides a lower propagation loss that should be caused by lightguide materials, a larger area and efficient optical coupling are the most important objectives of the study on optically integrated circuits. To meet these requirements, active efforts are increasingly made these daysto develop "hybrid" optical integrated circuits with the surface mounting of LDs or PDs, rather than the "monolithic" integration on the GaAs substrate.

Hybrid optical integrated circuits can be formed of various materials such as Si or an oxide thereof ($SiO_2$), glass, $LiNbO_3$ and polymer materials. $SiO_2$ and glass are not cost-effective since high temperature is required in the process of lightguide fabrication. Waveguides made of $LiNbO_3$ will experience an extremely high optical loss at bends. In contrast, polymeric materials have outstanding features in that their refractive indices can be controlled fairly easily by the addition of dyes or crosslinking agents and that they have a good film-forming property.

Also known in the art are waveguide-type optically active devices such as optical modulators and optical switches that are formed of nonlinear optical materials. One of the requirements to be satisfied by such waveguide-type optically active devices is that the distance between electrodes should be minimized in order to lower the drive voltage. If the nonlinear optical material is polymeric, it is particularly required that the waveguiding layer in a lightguide device be as thin as possible in order to reduce the inter-electrode distance. On the other hand, the waveguiding layer must be thick enough to reduce the possible optical coupling loss. In practice, it is difficult to meet these requirements at the same time.

One of the concepts that have long been known to be capable of increasing the efficiency of optical coupling is a "tapered" optical coupling waveguide. Most of the materials so far reviewed for use in such tapered optical coupling waveguides are III-V compound semiconductors such as GaAs and InP.

However, not a single study has been made on the fabrication of waveguides from $SiO_2/TiO_2$ base glass. As already mentioned, there is a limit on the maximum device area that can be realized with GaAs and, hence, it is not very meaningful to review the possibility of fabricating optical coupling waveguides using GaAs and InP. Under the circumstances, it is necessary to develop an optical coupling waveguide with a material which is insensitive to the principal lightguiding devices. However, none of these requirements have been fully met by the conventional technologies of optical coupling waveguides.

Disclosure of the Invention

The present invention has been accomplished under these circumstances and has as an object providing a method of forming an optical coupling waveguide that is capable of allowing individual optical devices to exhibit their inherent performance to the fullest extent.

Another object of the invention is to provide a lightguide device that is fabricated by the method.

The first object of the invention can be attained by a method of forming a polymeric optical coupling waveguide on a principal lightguide including a lightguiding layer, said method comprising the steps of:

a) applying a photopolymerizable monomer or a photocrosslinkable or photopolymerizable polymer or a mixture thereof onto the principal lightguide;

b) curing by exposure that area of the applied portion where the polymeric optical coupling waveguide is to be formed; and

c) removing the uncured area of the applied portion.

The object can also be attained by a method of forming a polymeric optical coupling waveguide on a principal lightguide including a lightguiding layer, said method comprising the steps of:

a) applying a photosolubilizable polymer onto the principal lightguide;

b) curing the applied polymer;

c) solubilizing by exposure that area of the applied portion except where the polymeric optical coupling waveguide is to be formed; and

d) removing the solubilized area of the applied portion.

The object can also be attained by a method of forming a polymeric optical coupling waveguide on a principal lightguide including a lightguiding layer, said method comprising the steps of:

a) applying a polymer onto the principal lightguide, said polymer being to form the polymeric optical coupling waveguide;

b) curing the applied polymer; and

c) patterning by photolithography (such as by a process comprising application of a resist, its curing, exposure, development, etching and removal of the resist) said cured polymer to the shape of the polymeric optical coupling waveguide.

According to these methods of the invention, the polymeric optical coupling waveguide is formed on the principal lightguide and this is in sharp contrast with the heretofore known technology of optical coupling waveguide fabrication using semiconductor or inorganic dielectric materials.

Brief Description of the Drawings

Fig. 1, shows the basic configuration of the lightguide device of the invention;

Fig. 2 shows an example of the lightguide device, in which an evanescent wave is used;

Fig. 3 shows another example of the lightguide device, in which mode coupling is used;

Fig. 4 shows yet another example of the lightguide, which is tapered in width so as to increase the resistance of mode coupling to variations in the length of the optical coupling waveguide;

Fig. 5 shows still another example of the lightguide, which is tapered in thickness so as to provide better coupling efficiency; and

Fig. 6 shows another example of the lightguide, which is tapered in both width and thickness.

The respective numerals in these figures have the following meanings: 1, polymeric optical coupling waveguide; 2, lightguiding layer; 3, upper cladding layer; 4, lower cladding layer; 5, optical fiber or semiconductor laser; and 6, principal lightguide.

Best Mode for Carrying Out the Invention

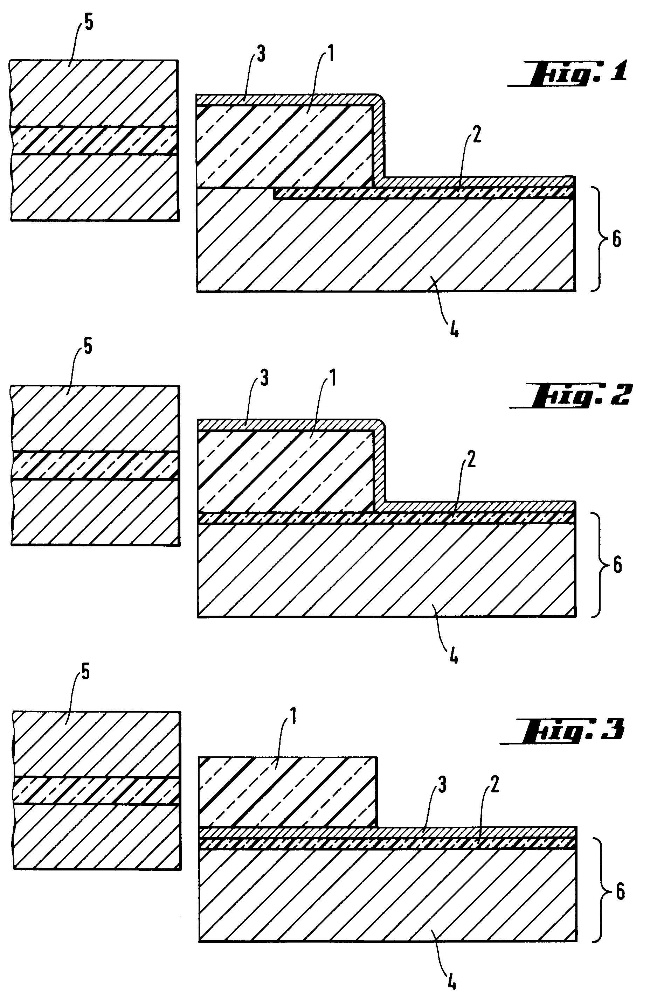

The term "principal lightguide" as used herein means that part of a lightguiding device which is generally referred to as a "lightguide" except the polymeric optical coupling waveguide which forms the characteristic portion of the invention. The principal lightguide is generally comprised of two layers, ie., lower cladding layer and a lightguiding layer, or three layers, ie., a lower cladding layer, a lightguiding layer and an upper cladding layer. Referring to Fig. 1 which shows an embodiment of the invention, the portion indicated by numeral 6 is the principal lightguide. In Fig. 1, the principal lightguide 6 composed of the lower cladding layer 4 and the lightguiding layer 2 is overlaid with the polymeric optical coupling lightguide 1 which, in turn, is overlaid with the upper cladding layer 3.

According to the first method of the invention, a photopolymerizable monomer or a photocrosslinkable or photopolymerizable polymer or a mixture thereof is applied onto the principal lightguide, and that area of the applied portion where an optical coupling waveguide is to be formed is allowed to cure by exposure through a photomask. Subsequently, the uncured area of the applied portion is removed by treatment with a suitable solvent, thereby providing a polymeric optical coupling waveguide. The procedure of applying polymerizable monomers or photocrosslinkable or photopolymerizable polymers is not limited in any particular way and spin coating may typically be employed.

The first class of materials that may be applied onto the principal lightguide are photopolymerizable monomers and they include the following compounds having a carbon-to-carbon double bond in the molecule: vinyl-containing compounds such as styrene, vinyltoluene, α-chlorostyrene, isopropylbenzene and 2-vinylpyridine; acrylate compounds such as acrylic acid, 2-ethylhexyl acrylate, n-stearyl acrylate, 2-hydroxyethyl acrylate, 2-hydroxypropyl acrylate, 2-methoxyethyl acrylate, 2-butoxyethyl acrylate, 2-ethoxyethyl acrylate and cyclohexyl acrylate; and methacrylate compounds such as methyl methacrylate, ethyl methacrylate, propyl methacrylate and isopropyl methacrylate. These compounds upon mixing with a photoradical initiator such as benzyldimethylketal become photopolymerizable. In the case of methyl methacrylate, an advantageous liquid mixture can be produced if poly(methyl methacrylate) is added to adjust the viscosity of the mixture and to improve its wetting property.

The materials from which the polymeric optical coupling waveguide is to be made must have refractive indices that satisfy the optical coupling condition and the liquid mixture described above permits for refractive index control by selecting appropriate types and amounts of crosslinking agents and dyes. To effect exposure, or to remove the uncured part of the coating that is formed by application of the liquid mixture, various solvents such as acetone, methanol, acetonitrile and THF may be used. It should be noted here that the invention is in no way limited to the photopolymerizable liquid systems exemplified by the liquid mixture described above. Other substances that can be used include commercial photocurable clear adhesives (e.g. HARDLOCK™ OP-1000 Series of Denki Kagaku Kogyo K.K.) and the uv curable adhesives described in N. Murata et al., J. Adhesion, vol. 35, 251 (1991).

The second class of materials that may be applied onto the principal lightguide are photocrosslinkable polymers that may typically have light-sensitive groups as pendants from the backbone chain, which may be provided from the backbone chain, which may be provided from the following compounds: polyethylenes such as poly-(tetrafluoroethylene-co-hexafluoro-propylene) and poly(tetrafluoroethylene); polymethacrylates such as poly(methyl methacrylate), poly(trifluoroethyl methacrylate), poly(cyclohexyl methacrylate), poly-(2-chloroethyl methacrylate), poly(2-bromoethyl methacrylate), poly(benzyl methacrylate), poly-(phenyl methacrylate), poly(p-bromophenyl methacrylate) and poly(pentachlorophenyl methacrylate); poly($\alpha$-naphthyl methacrylate) and poly(pentabromophenyl methacrylate); polystyrenes such as polystyrene and poly(o-chlorostyrene); as well as poly(vinylcarbazole), polyvinyl chloride, polycarbonates, polyimides, polyamides and polyurethanes. In order to attain lower refractive indices, photocrosslinkable polymers having the hydrogen atoms in the backbone chain replaced by fluorine atoms may also be used.

Light-sensitive groups are exemplified by a cinnamoyl group, a diazo group, a cinnamylidene group, an acryloyl group, a dithiocarbamate group, and functional groups containing carbon-to-carbon double bonds.

The third class of materials that may be applied onto the principal lightguide are prepolymers, or photopolymerizable polymers and these are the same as the aforementioned photocrosslinkable polymers, except that the aforementioned light-sensitive groups are attached either as pendants or terminals to the backbone chain of those polymers.

The above-described photopolymerizable monomers or photocrosslinkable or photopolymerizable polymers or mixtures thereof may optionally be mixed with amide-containing photocrosslinking agents such as 2,6-bis(4'-amidobenzoyl)-cyclohexanone, photoradical initiators such as benzyldimethylketal, and sensitizers such as Michler's ketone.

According to the second method of the invention, a photosolubilizable polymer is applied onto the principal lightguide and allowed to cure and that area of the applied portion except where a polymeric optical coupling waveguide is to be formed is solubilized by exposure through a photomask. The solubilized area is removed with a suitable solvent, thereby providing a polymeric optical coupling waveguide. As in the first method, the procedure of applying the photosolubilizable polymer is not limited in any particular way and spin coating may typically be employed. Examples of the photosolubilizable polymer include mixtures of alkali-soluble phenolic resins such as cresol novolak with naphthoquinone diazide, and polyamic acid-o-nitrobenzyl alcohol ester.

Specifically, the positive-acting resist AZ 1350 commercially available from Hoechst AG may be used. To remove the solubilized part, the AZ liquid developer of Hoechst AG may be used.

According to the third method of the invention, a polymer that is to form a polymeric optical coupling waveguide is applied onto the principal lightguide and the applied polymer is allowed to cure by a suitable technique and, subsequently, a photoresist is applied onto the cured polymer, which is patterned by a photolithographic technique comprising exposure through a photomask, development and other steps, thereby producing a polymeric optical coupling waveguide. The term "photolithographic technique" as used herein means a common patterning procedure used in the art which comprises a sequence of steps including application of a resist, evaporating the solvent, exposure, development and removal of the resist. The resist may be formed of any conventional and common materials for photoresists and it may be either negative- or positive-acting. The procedure of applying the polymer also is not limited in any particular way and spin coating may typically be employed.

The method of forming the polymeric optical coupling waveguide is not limited to the above-described photocuring using photocurable polymers. In another method, known optical polymers such as PMMA, polycarbonates, polystyrenes, polyamides and polyimides are dissolved in suitable solvents (e.g. cyclohexanone for PMMA) and the resulting solution is spin coated onto the polymeric lightguide device, with the solvent being evaporated in an oven to cure the coating. Other materials that may be used are polymers having the backbone chains of the polymers that are used in the aforementioned first method of the invention. The refractive indices of these polymers can be finely adjusted by addition of commercial dyes and the like. It should, however, be emphasized that the scope of the invention is in no way limited to the monomers and polymers listed above.

As already mentioned, the principal lightguide is generally comprised of a lower cladding layer and a lightguiding layer or, alternatively, a lower cladding layer, a lightguiding layer and an upper cladding layer. The principal lightguide is not limited to any particular type and it may be of a slab or channel type. The light-transmitting portion of the principal lightguide, namely, the slab or channel, is composed of materials having slightly higher values of refractive index than the surrounding cladding material. If the principal lightguide is of a channel type, various core channels and cladding materials may be combined and typical examples include: Corning™ combined with Pyrex™; glass doped with inorganic ions (e.g. $Ag^+$, $Tl^+$ and $K^+$) in combination with soda-lime glass; $LiNbO_3$ combined with Ti, $H^+$, Nb, Cu or otherwise diffused $LiNbO_3$; $Ta_2O_5$ or $Nb_2O_5$ combined with glass or $SiO_2$; polyurethanes, epoxides, PMMA, polycarbonates, photopolymers, polystyrenes, polyimides, polyamides, etc. combined with soda-lime glass or fused quartz. Commercial, inorganic ion diffused glass lightguide devices (Entwicklungsgesellschaft für Integrierte Optik-Technologie GmbH) may also be used as the principal lightguide.

The size of the core channel varies greatly depending on whether light propagates in a single mode or a multi mode.

The size of the core channel also depends on the index difference from the cladding material. The greater the index difference between the core channel of a single-mode waveguide and the cladding material, the smaller the size of the core channel that can be used effectively and vice versa. Generally speaking, a single-mode waveguide can be produced if $V = k_oT \sqrt{(n_G^2 - n_{CL}^2)}$ is no more than 3. In the equation, $k_o$ is equal to $2\pi/\lambda$ ($\lambda$ is the wavelength of light), T is the thickness of the core channel (or the core layer alone if the lightguide is of a slab type), and $n_G$ and $n_{CL}$ are the refractive indices of the core and the cladding materials, respectively. If $n_G = 1.55$, $n_{CL} = 1.50$ and $\lambda = 1.3 \mu m$, single-mode propagation is not realized unless the core thickness is 1.589 $\mu m$ or less.

The polymeric optical coupling waveguide may be formed over the lightguiding layer before the latter is overlaid with the upper cladding layer; alternatively, it may be formed over the upper cladding layer after the latter is provided on the lightguiding layer.

Thus, the present invention provides a method of forming the above-described polymeric optical coupling waveguide; additionally, it provides a lightguide device having the polymeric optical coupling waveguide that is formed by this method.

The polymeric optical coupling waveguide in the lightguiding device of the invention may be tapered in shape. Thus, in an embodiment of the invention, the polymeric optical coupling waveguide decreases in width with the increasing distance from an end face. In another embodiment of the invention, the polymeric optical coupling waveguide decreases in thickness with the increasing distance from an end face. According to still another embodiment of the invention, both the width and the thickness of the polymeric optical coupling waveguide decrease with the increasing distance from an end face.

The polymeric optical coupling waveguide can easily be tapered in width by selecting an appropriate photomask design. To taper the polymeric optical coupling waveguide in thickness, one of the following two techniques may be adopted. The first technique depends on "dithering" a photomask for producing an optical density profile. Stated more specifically, the polymer or resist becomes thin in the "dark" area of the mask but it is thick in the "light" area.

"Dithering" is a method for controlling the optical density profile by adjusting the number of tiny dots. In the first method of the invention, the thus cured product may be developed as it is, thereby creating a taper in thickness. In the second method of the invention, the photoresist is first tapered in thickness, then reactive ion etching is conducted to produce the desired shape.

The second technique of tapering the polymeric optical coupling waveguide involves the use of a mask tapered only in width and performing liquid development (which may be regarded as isotropic etching) to produce a polymeric optical coupling waveguide that is tapered in both width and thickness. Polymeric optical coupling waveguides of this geometry may be produced by the combination of the two techniques.

The lightguiding device of the invention can achieve an even higher optical coupling efficiency if the formation of the polymeric optical coupling waveguide is combined with tapering the area near the entrance and/or exit and faces of the channel lightguiding layer in the principal lightguide. It should be noted here that the polymeric optical coupling waveguide should have a higher refractive index at the exit end face than the channel-type lightguiding layer. Additionally, it is desired that the channel-type lightguiding layer should not be formed far enough to reach the exit end face.

The lightguide device of the invention is used with particular advantage as a waveguide-type polymeric optically active device which uses the electrooptic effect of polymers as described in C.C. Teng, Appl. Phys. Lett., vol. 60, 1538 (1992). Such photoactive devices require lower operating voltages and to this end, the inter-electrode distance must be minimized. With the contemplated device configuration, decreasing the inter-electrode distance means a corresponding decrease in the thickness of the lightguiding layer; in the absence of the optical coupling waveguide, the difficulty in optical coupling from a fiber or LD increases with the decreasing thickness of the lightguiding layer.

The invention provides ease in coupling a semiconductor laser, a photodiode or fiber optics to lightguiding devices, such as optically active devices of a waveguide type, having the polymeric optical coupling waveguide; further, the invention enables reduction not only in the thickness of the lightguiding layer and the drive voltage.

"Optical coupling" as used in the present invention is a technique commonly employed in the art, which is described in prior patents such as Japanese Patent Public Disclosure (kokai) Sho 60-133408, Sho 63-94205 and Hei 4-308803. Several methods of implementing "optical coupling" are described below.

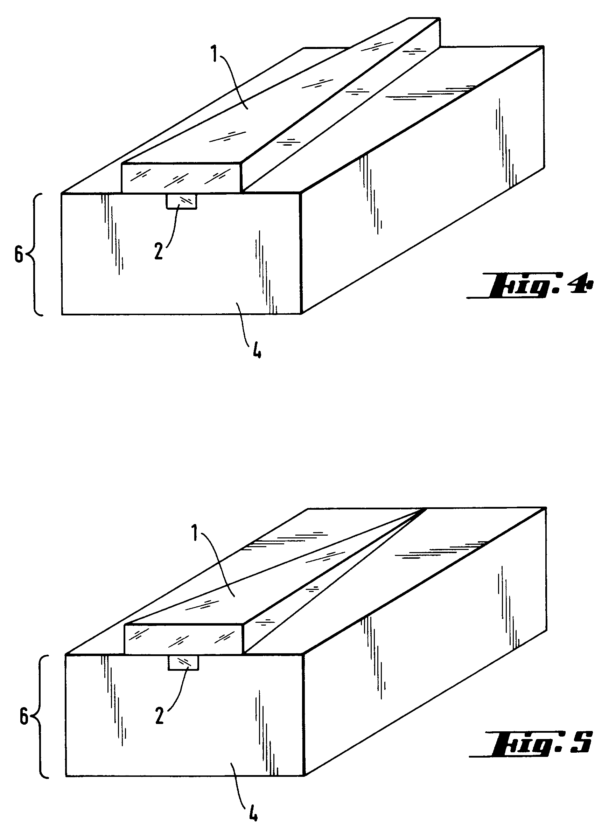

(1) An evanescent wave is first excited and its capability of propagating over a certain distance to the lightguiding layer 2 is utilized (see Fig. 2).

Conceptually, the lower cladding layer 4 is overlaid with the lightguiding layer 2, which in turn is overlaid with the polymeric optical coupling lightguide 1 and the upper cladding layer 3 in that order.

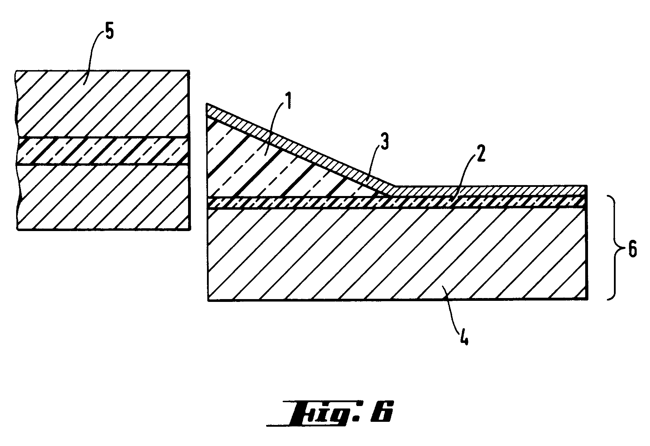

(2) The polymeric optical coupling waveguide 1 and the lightguiding layer 2 are regarded as forming a 2-layered waveguide and the conversion from the primary mode to the zeroth-order mode is utilized (see Fig. 3); this may also be regarded as mode coupling between two waveguides.

Conceptually, the lower cladding layer 4 is overlaid with the lightguiding layer 2, which in turn is overlaid with the upper cladding layer 3 and the polymeric optical coupling waveguide 1 in that order.

(3) The polymeric optical coupling waveguide 1 is tapered in width so that it is phase-matched with the lightguiding layer 1 whereas it is given resistance to the control over its length [see Fig. 4 and Y. Cai et al., Trans. IEICE, vol. E71, 931 (1988)].

(4) The polymeric optical coupling waveguide 1 is tapered in thickness (see Fig. 5 and Japanese Patent Public Disclosure (kokai) Sho 60-133408).

Conceptually, the lower cladding layer 4 is overlaid with the lightguiding layer 2 which in turn is overlaid with the polymeric optical coupling waveguide 1 tapered in thickness and the upper cladding layer 3 in the order written.

(5) The polymeric optical coupling waveguide 1 is tapered in both thickness and width (see Fig. 6 and Japanese Patent Public Disclosure (kokai) Hei 4-308803). Conceptually, the lower cladding layer 4 is overlaid with the lightguiding layer 2, which in turn is overlaid with the polymeric optical coupling waveguide 1 tapered in both thickness and width and the upper cladding layer 3 in the order written.

Refractive index conditions must be satisfied in cases (1) - (5). The condition to be satisfied in case (1) is $n_G > n_{CP} \geq n_{CL}$, where $n_{CP}$ is the refractive index of the polymeric optical coupling waveguide 1, $n_G$ the refractive index of the lightguiding layer 2, and $n_{CL}$ the refractive index of the cladding. The condition to be satisfied in cases (2) - (5) is $n_{CP} \cong n_G > n_{CL}$. Similar effects are achieved in cases (3) - (5) even if the upper cladding layer is provided between the polymeric optical coupling waveguide 1 and the lightguiding layer 2.

In order to reduce the optical coupling loss that will occur at the entrance end face, the latter is desirably subjected to optical polishing with diamond grits.

More preferably, the optically polished entrance end face is provided with an anti-reflection coat. Additionally, both an optical fiber and the polymeric optical coupling waveguide are bevelled at an end face by an angle of about 5 degrees in order to reduce reflection of light from end faces.

The following examples are provided for further illustrating the invention.

Example 1

A nonlinear optical polymer, or a 35/65 (mol/mol)

4-(N,N'-methacryloyl-ethoxy-methylamino)-4'-nitrostilbene/methacrylate copolymer (hereunder abbreviated as "P2NAS/MMA copolymer) was dissolved in cyclohexanone to prepare a 20 % solution, which was spin-coated onto a silicon substrate; then cyclohexanone was evaporated to form a lower cladding layer about 3 $\mu$m thick. A 50/50 (mol/mol) P2ANS/MMA copolymer was also dissolved in cyclohexanone to prepare a 20 % solution, which was spin-coated onto the lower cladding layer and cyclohexanone was subsequently evaporated to form a lightguiding layer which was also about 3 $\mu$m thick.

In the next step, the lightguiding layer was illuminated with light from a 1000 W xenon lamp through a photomask to form a channel-type lightguide. The thus formed channel-type lightguide was spin-coated with a 20/5/1 (wt/wt/wt) MMA/DMPA/PMMA solution through a 0.2 $\mu$m filter. The spin-coated film was heated in an oven at 40°C for 1 h and exposed to light from a 1000 W xenon lamp through a photomask. The film was further heated in an oven at 100°C for 1 h and developed with methanol. Thereafter, the film was heated on a hot plate at 200°C for 5 min to form a polymeric optical coupling waveguide 30 $\mu$m thick. The waveguide in turn was spin-coated with a 40/10/1 (wt/wt/wt) mixture of MMA/DMPA/PMMA in solution and allowed to cure by the same method but without using a photomask to form an upper cladding layer, thereby completing the fabrication of a lightguide device having the same structure as shown in Fig. 1.

Example 2

The lightguide device fabricated in Example 1 was cleaved in the silicon substrate and the cleaved surfaces were polished optically to insure alignment between the entrance and exit end faces. Then, a semiconductor laser beam ($\lambda$ = 1.3 $\mu$m) was admitted into the polymeric optical coupling waveguide through a single-mode optical fiber and the light emerging from the exit end face was picked up by an objective lens to measure the power of the output light.

The output power was at least 3 times that of a lightguide device having no optical coupling waveguide.

Example 3

A commercial glass lightguide device (Entwicklungsgesellschaft für Integrierte Optik-Technologie GmbH) was spin coated with a commercial photocurable adhesive (HARDLOCK™ OP-1020M of Denki Kagaku Kogyo K.K.) and the resulting coat was cured by exposure to a xenon lamp (1000 W) through a photomask.

The uncured portion of the exposed coat was subjected to development with acetonitrile, thereby forming a polymeric optical coupling waveguide 12 $\mu$m thick that tapered in width. Using this waveguide, a lightguide device was fabricated.

Example 4

The entrance end face of the lightguide device fabricated in Example 3 was roughly polished with a lapping film sheet and then finely polished with a diamond slurry. After this end preparation, a semiconductor laser light having a wavelength of 1.3 $\mu$m was directed through a single-mode optical fiber to be launched into the lightguide device. The light issuing from the exit end face was picked up by an objective lens to measure the optical output power. The resistance to a displacement for a coupling efficiency of 3 dB was 2.0 $\mu$m in the case of the commercial lightguide device having no polymeric optical coupling waveguide but improved to 4.0 $\mu$m by incorporating the polymeric optical coupling waveguide according to the invention.

Example 5

The same commercial glass lightguide device as used in Example 3 was spin coated with a positive-acting resist AZ 1350 (Hoechst AG) and the applied coat was cured on a hot plate. The cured coat was exposed to a xenon lamp (1000 W) to solubilize the areas other than the area where a polymeric optical coupling waveguide was to be formed. By development with an AZ liquid developer (Hoechst AG), a polymeric optical coupling waveguide tapering in width was formed. Using this waveguide, a lightguide device was fabricated.

Example 6

The entrance end face of the lightguide device fabricated in Example 5 was roughly polished with a lapping film sheet and then finely polished with a diamond slurry. After this end preparation, a semiconductor laser light having a wavelength of 1.3 $\mu$m was directed through a single-mode optical fiber to be launched into the lightguide device. The light issuing from the exit end face was received by an objective lens to measure the optical output power. The resistance to a displacement for a coupling efficiency of 3 dB was 2.0 $\mu$m in the case of the commercial lightguide device having no polymeric optical coupling waveguide but improved to 7.0 $\mu$m by incorporating the polymeric optical coupling waveguide according to the invention.

Example 7

The same commercial glass lightguide device as used in Example 3 was spin coated with a cyclohexane solution of 10 % PMMA (polymethyl methacrylate) supplemented with an organic dye C.I. Disperse Red 1 for index adjustment.

The applied coat was cured by drying in an oven (160°C) for 4 h. Further, the cured coat was patterned as in Example 5 by application of a positive-acting resist (AZ 1350 of Hoechst AG).

Subsequently, reactive ion etching (RIE) was performed to provide an optical coupling waveguide. By removing the remaining resist, a lightguide device was fabricated.

Example 8

The entrance end face of the lightguide device fabricated in Example 7 was roughly polished with a lapping film sheet and then finely polished with a diamond slurry. After this end preparation, a semiconductor laser light having a wavelength of 1.3 $\mu$m was directed through a single-mode optical fiber to be launched into the lightguide device. The light issuing from the exit end face was picked up by an objective lens to measure the optical output power. The resistance to a displacement for a coupling efficiency of 3 dB was 2.0 $\mu$m in the case of the commercial lightguide device having no polymeric optical coupling waveguide but improved to 7.5 $\mu$m by incorporating the polymeric optical coupling waveguide according to the invention.

Example 9

Methyl methacrylate (MMA) and glycidyl methacrylate (GMA) were mixed at a molar ratio of 3:7. A solvent tetrahydrofuran (THF) was added to the mixture in such an amount that the concentration of the monomer mixture would be about 10 wt %. A catalyst 2,2'-azobis(isobutyronitrile) (AIBN) was added to the monomer mixture in an amount of about 2 mol %. The resulting mixture was subjected to reaction at 70°C for 5 h in a nitrogen gas atmosphere, thereby yielding a polymer.

The polymer thus produced was purified by precipitation from methanol. This procedure was repeated about three times. The purified polymer was dissolved in toluene and an excess amount of cinnamic acid was dissolved in the solution.

After reaction at 110°C for 5 h, toluene was removed and the remaining solids were dissolved in ethyl acetate. To remove the unreacted cinnamic acid, a saturated solution of sodium hydrogen carbonate was added to the ethyl acetate solution and the mixture was shaken with a separating funnel and allowed to stand and the aqueous layer was discarded. This procedure was repeated two more times and the ethyl acetate solution was washed with water to remove ethyl acetate. The resulting polymer was dissolved in cyclohexane to make a 30 wt % solution. By addition of 2,2-dimethoxy-2-phenylacetone, a solution of photocrosslinkable polymer was formed.

The same commercial glass waveguide as used in Example 3 was dip coated with the polymer solution and the applied coat was dried on a hot plate (90°C) for 3 h to evaporate the solvent, followed by exposure to a xenon lamp (1000 W) for 5 min through a photomask. By subsequent development with a mixed solution of methanol and N-methyl-2-pyrrolidone, a polymeric optical coupling waveguide with a taper in width was formed. Using this waveguide, a lightguide device was fabricated.

Example 10

The entrance end face of the lightguide device fabricated in Example 9 was roughly polished with a lapping film sheet and then finely polished with a diamond slurry. After this end preparation, a semiconductor laser light having a wavelength of 1.3 $\mu$m was directed through a single-mode optical fiber to be launched into the lightguide device. The light issuing from the exit end face was picked up by an objective leans to measure the optical output power. The resistance to a displacement for a coupling efficiency of 3 dB was 2.0 $\mu$m in the case of the commercial lightguide device having no polymeric optical coupling waveguide but improved to 4.0 $\mu$m by incorporating the polymeric optical coupling waveguide according to the invention.

Industrial Applicability

The invention achieves a substantial improvement in resistance to displacements and, if the lightguiding is thin, the efficiency of coupling from fiber optics can easily be improved by a factor of at least 3.

**Claims**

1. A method of forming a polymeric optical coupling waveguide 1 on a principal lightguide 6 including a lightguiding layer 2, said method comprising the steps of:

a) applying a photopolymerizable monomer or a photocross-linkable or photopolymerizable polymer or a mixture thereof onto the principal lightguide 6;
b) curing by exposure that area of the applied portion where the polymeric optical coupling waveguide 1 is to be formed; and
c) removing the uncured area of the applied portion.

2. A method of forming a polymeric optical coupling waveguide 1 on a principal lightguide 6 including a lightguiding layer 2, said method comprising the steps of:

a) applying a photosolubilizable polymer onto the principal lightguide 6;
b) curing the applied polymer;
c) solubilizing by exposure that area of the applied portion except where the polymeric optical coupling waveguide 1 is to be formed; and
d) removing the solubilized area of the applied portion.

3. A method of forming a polymeric optical coupling waveguide 1 on a principal lightguide 6 including a lightguiding layer 2, said method comprising the steps of:

a) applying a polymer onto the principal lightguide 6, said copolymer being to form the polymeric optical coupling waveguide 1;

b) curing the applied polymer; and

c) patterning by photolithography said cured polymer to the shape of the polymeric optical coupling waveguide 1.

4. A method according to claim 1, 2 or 3 wherein the polymeric optical coupling waveguide 1 is formed before the upper cladding layer 3 is provided on the lightguiding layer 2.

5. A method according to claim 1, 2 or 3 wherein the polymeric optical coupling waveguide 1 is formed after the upper cladding layer 3 is formed on the lightguiding layer 2.

6. A lightguide device having a polymeric optical coupling waveguide 1 provided on a principal lightguide 6 including a lightguiding layer 2.

7. A lightguide device according to claim 6 wherein the principal lightguide 6 comprises a lower cladding layer 4 and the lightguiding layer 2 and wherein the polymeric optical coupling waveguide 1 is provided on the lightguiding layer 2 and overlaid with an upper cladding layer 3.

8. A lightguide device according to claim 6 wherein the principal lightguide 6 comprises a lower cladding layer 4, the lightguiding layer 2 and an upper cladding layer 3, said upper cladding layer 3 being overlaid with the polymeric optical coupling waveguide 1.

9. A lightguide device according to any one of claims 6-8 wherein the width of the polymeric optical coupling waveguide 1 decreases with the increasing distance from an end face.

10. A lightguide device according to any one of claims 6-8 wherein the thickness of the polymeric optical coupling waveguide 1 decreases with the increasing distance from an end face.

11. A lightguide device according to any one of claims 6-8 wherein both the width and the thickness of the polymeric optical coupling waveguide 1 decrease with the increasing distance from an end face.

12. A lightguide device according to any one of claims 6-11 wherein the lightguiding layer 2 is of a channel type and wherein the width of said channel-type lightguiding layer decreases with the increasing distance from an end face.

13. A lightguide device according to any one of claims 6-11 wherein the lightguiding layer 2 is of a channel type and wherein said channel-type lightguiding layer does not extend as far as the exit end face.

14. A lightguide device according to any one of claims 6-13 which is to be used as a waveguide-type optically active device.

Fig. 1

Fig. 2

Fig. 3

Fig. 4

Fig. 5

Fig. 6